# EUROPEAN PATENT APPLICATION

(11) **EP 1 761 061 A2**
(43) Date of publication of application: **07.03.2007**
(21) Application number: 06291372.8
(22) Date of filing: 29.08.2006
(51) Int. Cl.: H04N 7/24

(54) **Digital television signal, method of processing the same in transmitter and receiver, digital broadcast receiver and digital broadcast transmitter**

(30) Priority: 29.08.2005 KR 20050079461
(71) Applicant: LG Electronics Inc., Yongdungpo-gu Seoul (KR)
(72) Inventor: Yi Lee, Sang, Bundang-gu Seongnamsi Gyeonggido 463-753 (KR)
(74) Representative: Bethenod, Marc

(57) **Abstract**

A digital television signal, method of processing the same in a transmitter and receiver, digital broadcast transmitter and digital broadcast receiver are disclosed, in which if a prescribed program having been broadcast by a prescribed broadcast medium is retransmitted by another broadcast medium, a field indicating an original broadcast medium having broadcast the corresponding program is added. The present invention includes a step (a) of receiving an service information table including an original media type field, a step (b) of extracting the original media type field indicating an original broadcast medium of a retransmitted program by parsing the service information table, and a step (c) of displaying the original broadcast medium of the retransmitted program.

## Description

This application claims the benefit of the Korean Patent Application No. 10-2005-0079461, filed on August 29, 2005, which is hereby incorporated by reference as if fully set forth herein.

### BACKGROUND OF THE INVENTION

### Field of the Invention

The present invention relates to digital broadcast signal transmission and reception, and more particularly, to a digital television signal, method of processing the same in a transmitter and receiver, digital broadcast transmitter and digital broadcast receiver. Although the present invention is suitable for a wide scope of applications, it is particularly suitable for transmitting and receiving a digital broadcast signal including information for indicating an original broadcast medium in case of retransmitting the digital broadcast signal.

### Discussion of the Related Art

Generally, television broadcast signals are transmitted via various broadcast media such as a satellite, a terrestrial wave, a cable and the like. An initial manufacturing cost of a prescribed program carried by the television broadcast signal is considerably high. So, a method of retransmitting programs broadcast and shared by various broadcast media has been actively discussed. And, program retransmissions have been already performed via AV (audio and video) broadcast in part.

Yet, specifications for the program retransmitting method have not been clearly provided. So, in case that satellite broadcasting, terrestrial broadcasting and cable broadcasting adopt different specifications, respectively, various broadcasting providers retransmit programs in different ways, respectively.

For instance, in case that cable broadcasting attempts to retransmit programs broadcast via satellite or terrestrial waves, theses retransmission programs are newly configured to fit a channel set up by the cable broadcasting. So, cable broadcast viewers are unable to recognize whether a prescribed program is the program retransmitted by another broadcast medium but are able to recognize the prescribed program as a program carried on one of various channels of the cable broadcasting.

And, a viewer of satellite broadcasting or terrestrial broadcasting just recognizes that a currently viewed program is carried by one of various channels broadcast by a corresponding broadcast medium but is unable to recognize whether the currently viewed program is a retransmitted program that was broadcast by another broadcast medium such as a cable broadcasting and the like.

In particular, in case that a broadcast provider, who broadcasts a prescribed program via a prescribed broadcast medium, retransmits a program via its broadcast medium in a manner of being provided with the program having been broadcast by another broadcast medium, if a channel of the corresponding program to broadcast corresponds to an original channel, the channel of the program broadcast by its broadcast medium comes into collision with the channel of the retransmitted program.

In order for a broadcasting provider to prevent the collision between the channels of the retransmitted program and the channel of a program broadcast by the broadcasting provider, the broadcasting provider modifies the channel of the retransmitted program to fit its broadcast medium. If so, when a broadcast signal receiver receives a program transmitted on a prescribed channel, a channel of the corresponding program is displayed as a channel set by the broadcasting provider.

However, a user is unable to decide whether a currently viewed program is a program transmitted by a corresponding broadcast medium itself or a retransmitted program that was broadcast by another broadcast medium.

And, the user is also unable to confirm what kind of channel is used for the retransmitted program and what kind of broadcast medium broadcasts the retransmitted program.

### SUMMARY OF THE INVENTION

Accordingly, the present invention is directed to a digital television signal, method of processing the same in a transmitter and receiver, digital broadcast transmitter and digital broadcast receiver that substantially obviate one or more problems due to limitations and disadvantages of the related art.

An object of the present invention is to provide a digital television signal, method of processing the same in a transmitter and receiver, digital broadcast transmitter and digital broadcast receiver, in which if a prescribed program having been broadcast by a prescribed broadcast medium is retransmitted by another broadcast medium, a field indicating an original broadcast medium having broadcast the corresponding program is added.

Another object of the present invention is to provide a digital television signal, method of processing the same in a transmitter and receiver, digital broadcast transmitter and digital broadcast receiver, in which if a prescribed program having been broadcast by a prescribed broadcast medium is retransmitted by another broadcast medium, the corresponding broadcast medium sets information for an original channel having carried the corresponding program in service information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of processing a digital television signal in a digital television receiver according to the present invention includes a step (a) of receiving an service information table including an original media type field, a step (b) of extracting the original media type field indicating an original broadcast medium of a retransmitted program by parsing the service information table, and a step (c) of displaying the original broadcast medium of the retransmitted program.

Preferentially, the method further includes the step of extracting an original channel number of the retransmitted program.

Preferentially, the method further includes the step of configuring a channel map by synthesizing the extracted original broadcast medium and the original channel number of the retransmitted program.

In another aspect of the present invention, a method of processing a digital television signal in a transmitter includes a step (a) of inserting an original media type field indicating an original broadcast medium of a retransmitted program into a service information table and a step (b) of transmitting the service information table.

Preferentially, the method further includes the step of setting a channel number to an original channel number of the retransmitted program.

In another aspect of the present invention, a digital broadcast receiver includes a tuner receiving a broadcast signal equipped with an original media type field indicating an original broadcast medium of a retransmitted program, a decoder extracting the original media type field by parsing the received broadcast signal, and a control unit controlling a channel information output according to a value of the extracted original media type field.

Preferentially, the digital broadcast receiver further includes a display unit displaying the extracted original broadcast medium and the original channel number of the retransmitted program.

In another aspect of the present invention, a digital broadcast transmitter includes at least one retransmission program providing unit providing a retransmission program and service information to be broadcasted via a first broadcast medium, at least one broadcast media information setting unit setting information of an original broadcast medium having broadcasted the retransmission program in the service information provided by the at least one retransmission program providing unit, and a transmitting unit transmitting a broadcast signal having the retransmission information set therein.

Preferentially, the digital broadcast transmitter further includes a synthesizing unit synthesizing the retransmission program provided by the at least one retransmission program providing unit and the service information in which the at least one broadcast media information setting unit has set the broadcast media information.

In a further aspect of the present invention, a digital television signal, which is used for a digital television receiver in receiving program information from a broadcast transmitter, includes a service information table including an original media type field indicating an original broadcast medium of a retransmitted program.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIGs. 1A to 1C are diagrams of a short-form virtual channel table according to the present invention;

FIG. 2 is a diagram of a long-form virtual channel table according to the present invention;

FIG. 3 is a diagram of an original media type field according to an embodiment of the present invention;

FIG. 4 is a block diagram of a transmitter according to an embodiment of the present invention;

FIG. 5 is a flowchart for a method of processing a digital television signal in a transmitter according to an embodiment of the present invention;

FIG. 6 is a block diagram of a broadcast receiver according to an embodiment of the present invention;

FIG. 7 is a block diagram of a broadcast receiver according to an embodiment of the present invention;

FIG. 8 is a flowchart of a method of processing a digital television signal in a receiver according to an embodiment of the present invention; and

FIG. 9A and FIG. 9B are diagrams of outputs of broadcast signals according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

First of all, the present invention provides a type of an original broadcast medium and original broadcast channel information in case of retransmitting a previously produced program that was broadcast via a different broadcast medium.

For this, the present invention proposes that an original field type to a service information table indicating channel information. And, the present invention proposes that a value of an external mapping channel number that is a user-viewable channel number of a service information table indicating channel information. Through this, a viewer is able to recognize a retransmitted broadcast and a channel map can be configured with a modified channel number in a receiver.

There are many tables as the service information table. For example, there are a program map table (PMT) of Program Specific Information (PSI), a virtual channel table (VCT) of a Program and System Information Protocol (PSIP) and a service description table (SDT) of Service Information (SI) of a DVB.

The virtual channel tables (VCT) of PSIP are classified into a cable virtual channel table (CVCT) and a terrestrial virtual channel table (TVCT). And, the VCT can be represented as a short-form or a long-form. The short-form VCT is a table illustrating channel information in brief, whereas the long-form VCT is a table illustrating channel information in detail. Whether to transmit the short-form VCT or the long-form VCT depends on a selection made by a broadcasting provider. And, the short-form VCT and the long-form VCT can be transmitted respectively or simultaneously.

A broadcast receiver is able to configure a channel map and receive to view a program of a user-selected channel using the channel information table.

An original media type field according to the present invention can be added to a reserved or zero field of the channel information table. The reserved or zero field is the field left for a future use. For the reserved or zero field, an area is allocated to prevent a whole table from being modified in adding a standardized table in spite of being unused currently.

An original media type field according to the present invention indicates a previous original broadcast medium in case that a program is retransmitted by another broadcast medium. As a broadcast medium, there is cable, terrestrial, satellite, digital audio broadcasting (DAB), digital multimedia broadcasting (DMB) or the like.

For instance, in case of a program originally broadcast by terrestrial broadcasting and retransmitted by cable broadcasting, an original media type field has a value that indicates the terrestrial broadcasting. In case of a program originally broadcast by cable broadcasting and retransmitted by satellite broadcasting, an original media type field has a value that indicates the cable broadcasting.

An embodiment of a service information table including an original media type field according to the present invention is explained as follows. In particular, VCT of the service information table is described as an embodiment of the present invention.

The Virtual Channel Table (VCT) contains a list of attributes for virtual channels carried in the Transport Stream. Any changes in the virtual channel structure shall be conveyed with a new version number. The basic information contained in the VCT table body includes Transport Stream ID, channel number (major and minor), short channel name, program number, access controlled flag, location field for extended text messages and service type. Additional information may be carried by descriptors which may be placed in the descriptor loop after the basic information.

The Virtual Channel Table may be segmented into as many as 256 sections. One section may contain information for several virtual channels, but the information for one virtual channel shall not be segmented and put into two or more sections. Thus for each section, the first field after protocol_version shall be num_channels_in_section.

Each virtual channel is associated with a program_number. Every program element associated with that program_number shall be considered to be a part of that virtual channel.

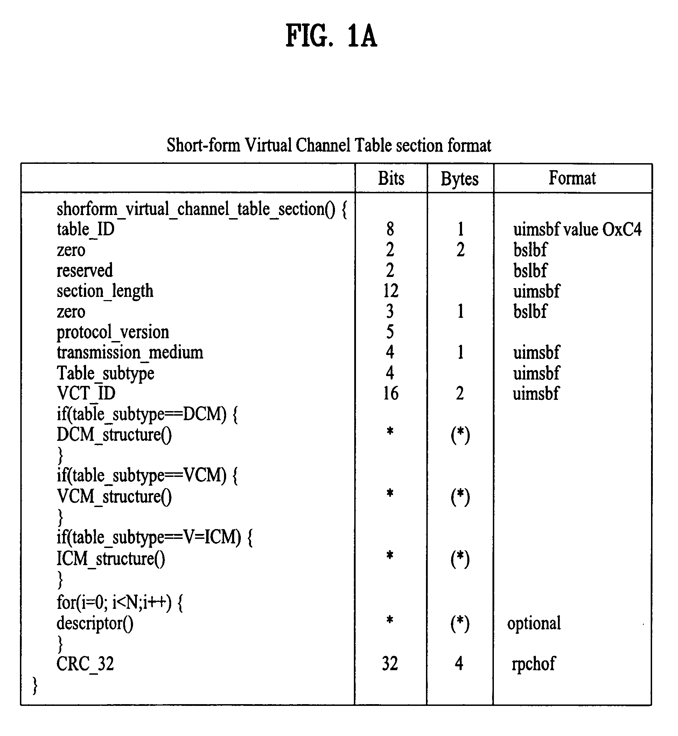

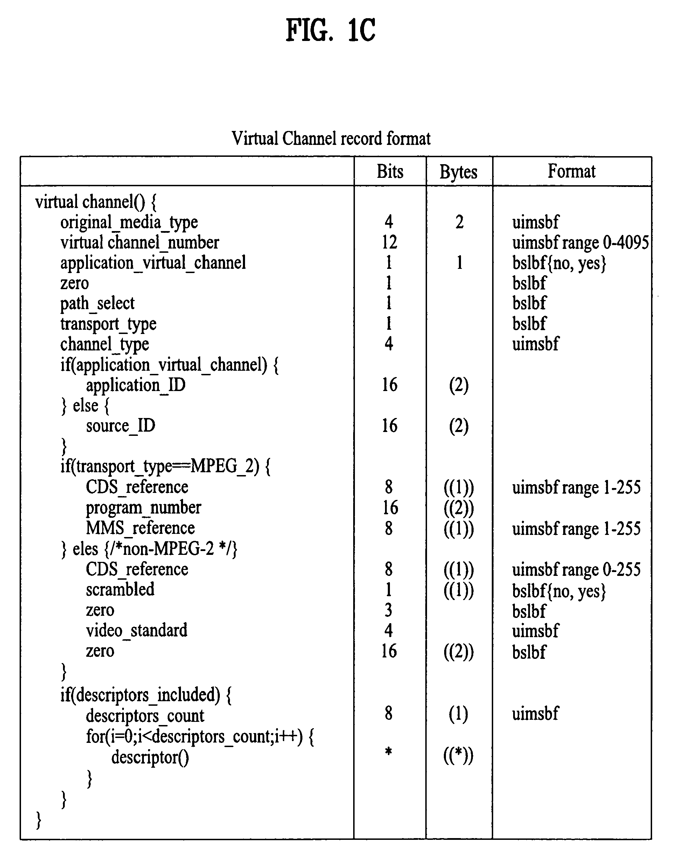

FIGs. 1A to 1C are structural diagrams of a short-form virtual channel table according to the present invention, in which a structure of adding an original media type field according to the present invention within a short-form VCT is shown.

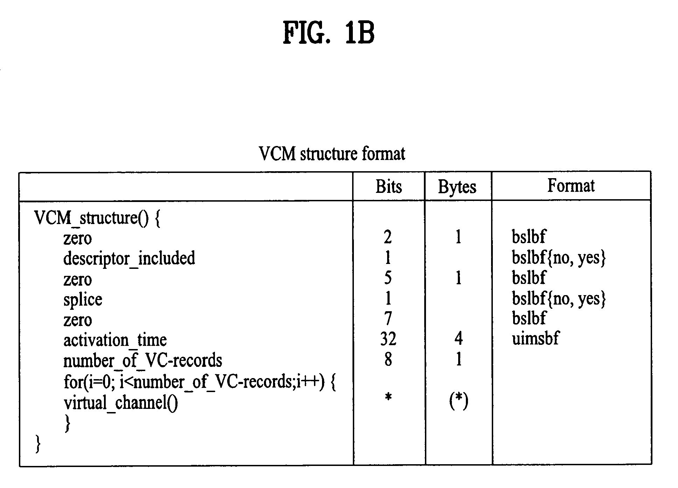

FIG. 1A shows a whole short-form VCT section format including a VCM_structure format. FIG. 1B shows a VCM_structure format, in which VCM_structure includes virtual_channel () format. And, FIG. 1C shows virtual_channel() format that includes a feature of the present invention. In the following description, field addition and channel information value change according to the present invention are associated with the virtual_channel format shown in FIG. 1C.

FIG. 1C includes information for a channel associated with a prescribed program.

Virtual channel format indicates channel information for one program. Using this information, a receiver receives a program and differentiates its output.

Fields associated with the present invention in short-form virtual channel format are explained as follows.

First of all, program_number field is a field for performing internal mapping to enable a receiver to identify a program. In the program_number field is responsible for a mapping associated with a tuning of a broadcast signal. So, the receiver recognizes a program number field value to recognize a retransmitted broadcast program.

And, original media type field indicates a medium that originally has broadcast a retransmitted broadcast program. A receiver interprets this field to enable a viewer to know an original broadcast medium. For instance, when cable broadcasting retransmits a terrestrial broadcast program, it is not displayed as cable broadcasting but is outputted as terrestrial broadcasting that is an original broadcast medium.

The original media type field is inserted into a zero field or a reserved field of virtual channel() format containing substantial information for a program. The original media type field is usable within a range of a bit value of the zero or reserved field. In this case, a remaining bit value is left as a reserved field for a later use.

A virtual channel number is a field for performing an external mapping viewable by a user. In particular, the virtual channel number field is responsible for a mapping associated with a channel number a user is able to see in a channel map. A receiver outputs a value of this field as a channel number and configures a channel map. For instance, when cable broadcasting retransmits a terrestrial broadcast program, the cable broadcasting is able to output a channel number of terrestrial broadcasting instead of displaying an original channel number of the cable broadcasting.

Thus, in case that a program of 9-1 channel of terrestrial broadcasting is retransmitted on 369 channel of cable broadcasting, a receiver interprets the original media type field and a virtual channel number to configure a channel map with terrestrial 9-1.

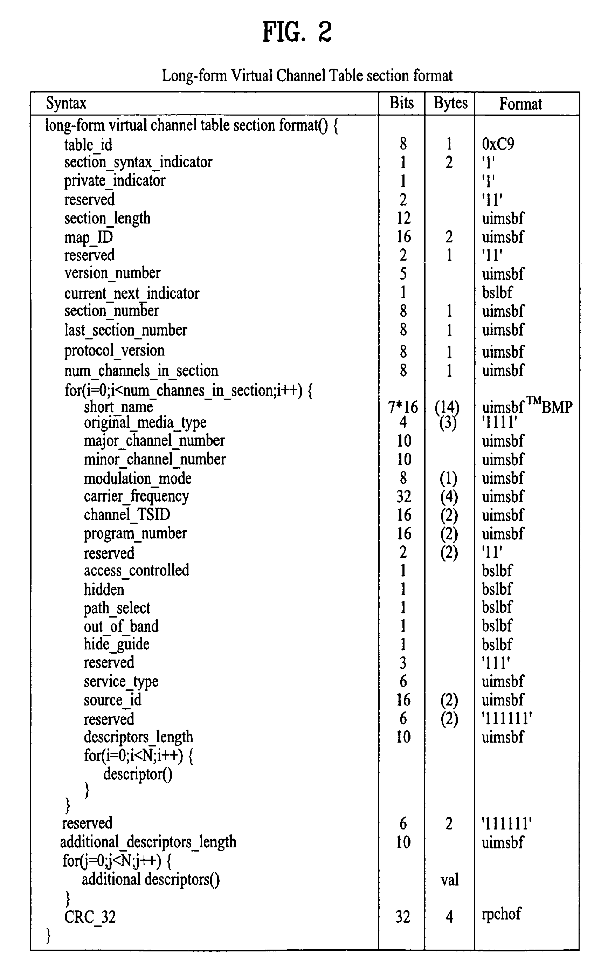

FIG. 2 is a diagram of a long-form virtual channel table according to the present invention.

Referring to FIG. 2, an original media type field according to the present invention is added to a reserved field of a channel loop indicating channel information of a long-form virtual channel table and a value of a channel number field is changed into a channel value that was originally broadcast.

Individual fields of the long-form virtual channel table are explained in detail as follows.

**table_id** field - An 8-bit unsigned integer number that indicates the type of table section being defined here.

**section_syntax_indicator** field - The section_syntax_indicator is a 1-bit field which shall be set to '1' for the virtual_channel_table_section ().

**transport_stream_id** field - The 16-bit MPEG-2 Transport Stream ID, as it appears in the Program Association Table (PAT) identified by a PID value of zero for this multiplex. The transport_stream_id distinguishes this Virtual Channel Table from others that may be broadcast in different PTCs.

**version_number** field - This 5-bit field is the version number of the Virtual Channel Table. For the current VCT (current_next_indicator = '1'), the version number shall be incremented by 1 whenever the definition of the current VCT changes. Upon reaching the value 31, it wraps around to 0. For the next VCT (current_next_indicator = '0'), the version number shall be one unit more than that of the current VCT (also in modulo 32 arithmetic). In any case, the value of the version_number shall be identical to that of the corresponding entries in the MGT.

**current_next_indicator** field - A 1-bit indicator, which when set to '1' indicates that the Virtual Channel Table sent is currently applicable. When the bit is set to '0', it indicates that the table sent is not yet applicable and shall be the next table to become valid. This standard imposes no requirement that "next" tables (those with current_next_indicator set to '0') must be sent. An update to the currently applicable table shall be signaled by incrementing the version_number field.

**section_number** field - This 8-bit field gives the number of this section. The section_number of the first section in the Virtual Channel Table shall be 0x00. It shall be incremented by one with each additional section in the Terrestrial Virtual Channel Table.

**last_section_number** field - This 8-bit field specifies the number of the last section (that is, the section with the highest section_number) of the complete Terrestrial Virtual Channel Table.

**protocol_version** field - An 8-bit unsigned integer field whose function is to allow, in the future, this table type to carry parameters that may be structured differently than those defined in the current protocol. At present, the only valid value for protocol_version is zero. Non-zero values of protocol_version may be used by a future version of this standard to indicate structurally different tables.

**num_channels_in_section** field - This 8-bit field specifies the number of virtual channels in this VCT section. The number is limited by the section length.

**short_name** field - The name of the virtual channel, represented as a sequence of one to seven 16-bit code values interpreted in accordance with the UTF-16 representation of Unicode character data. If the length of the name requires fewer than seven 16-bit code values, this field shall be padded out to seven 16-bit code values using the Unicode NUL character.

**modulation_mode** field - An 8-bit unsigned integer number that indicates the modulation mode for the transmitted carrier associated with this virtual channel. For digital signals, the standard values for modulation mode (values below 0x80) indicate transport framing structure, channel coding, interleaving, channel modulation, forward error correction, symbol rate and other transmission-related parameters, by means of a reference to an appropriate standard. The modulation_mode field shall be disregarded for inactive channels.

**channel_TSID** field - A 16-bit unsigned integer field in the range 0x0000 to 0xFFFF that represents the MPEG-2 Transport Stream ID associated with the Transport Stream carrying the MPEG-2 program referenced by this virtual channel. For inactive channels, channel_TSID shall represent the ID of the Transport Stream that will carry the service when it becomes active. The receiver is expected to use the channel_TSID to verify that any received Transport Stream is actually the desired multiplex. For analog channels (service_type 0x01), channel_TSID shall indicate the value of the analog TSID included in the VBI of the NTSC signal.

**program_number** field - A 16-bit unsigned integer number that associates the virtual channel being defined here with the MPEG-2 PROGRAM ASSOCIATION and TS PROGRAM MAP tables. For virtual channels representing analog services, a value of 0xFFFF shall be specified for program_number. For inactive channels (those not currently present in the Transport Stream), program_number shall be set to zero. This number shall not be interpreted as pointing to a Program Map Table entry.

**access_controlled** field - A 1-bit Boolean flag that indicates, when set, that the events associated with this virtual channel may be access-controlled. When the flag is set to '0', event access is not restricted.

**service_type** field - A 6-bit enumerated type field that shall identify the type of service carried in this virtual channel.

**source_id** field - A 16-bit unsigned integer number that identifies the programming source associated with the virtual channel. In this context, a source is one specific source of video, text, data, or audio programming. Source ID value zero is reserved. Source ID values in the range 0x0001 ATSC A/65C Program and System Information Protocol 2 January 2006 35 to 0x0FFF shall be unique within the Transport Stream that carries the VCT, while values 0x1000 to 0xFFFF shall be unique at the regional level. Values for source_ids 0x1000 and above shall be issued and administered by a Registration Authority designated by the ATSC.

In case of retransmitting a program, 'original media type' is a field for indicating a broadcast medium that originally has broadcasted the program. A currently used broadcast medium has a unique value and bits 's' remaining for additional of a future-occurring broadcast medium is left as a reserved field. A newly occurring broadcast medium is addable. This field is inserted to a position assigned as a reserved field in a channel loop of a conventional VCT table. And, this field can be inserted in any position of the reserved field of the channel loop. In the present invention, it is proposed that this field is added to a second field of a channel loop of VCT, i.e., 4-bit reserved field next to short_name field.

**major channel number** field - A 10-bit number that represents the "major" channel number associated with the virtual channel being defined in this iteration of the "for" loop. Each virtual channel shall be associated with a major and a minor channel number. The major channel number, along with the minor channel number, acts as the user's reference number for the virtual channel. The major_channel_number shall be between 1 and 99. The value of major_channel_number shall be set such that in no case is a major_channel_number/minor_channel_number pair duplicated within the VCT.

**minor_channel_number** field - A 10-bit number in the range 0 to 999 that represents the "minor" or "sub"- channel number. This field, together with major_channel_number, performs as a two-part channel number, where minor_channel_number represents the second or right-hand part of the number. When the service_type is analog television, minor_channel_number shall be set to 0.

Services whose service_type is either ATSC_digital_television or ATSC_audio_only shall use minor numbers between 1 and 99. The value of minor_channel_number shall be set such that in no case is a major_channel_number/minor_channel_number pair duplicated within the TVCT. For other types of services, such as data broadcasting, valid minor virtual channel numbers are between 1 and 999.

And, a channel number value of an original broadcast medium can be inserted in the major and minor channel numbers.

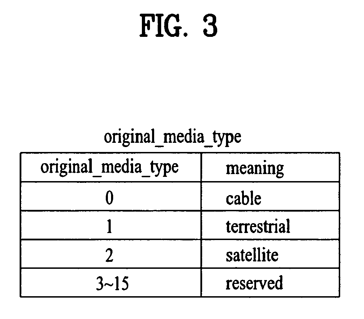

FIG. 3 is a diagram of an original media type field according to an embodiment of the present invention.

Referring to FIG. 3, '0', '1' and '2' are assigned to cable, terrestrial and satellite, respectively. And, remaining bits 's' are reserved. This is just exemplary. And values can be assigned to other broadcast media.

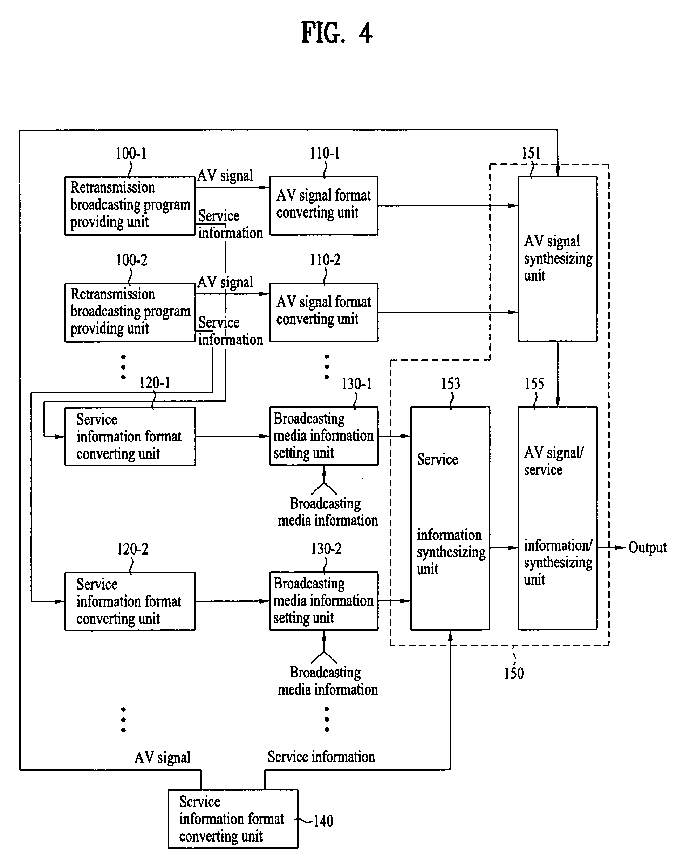

FIG. 4 is a block diagram of a transmitter according to an embodiment of the present invention.

Referring to FIG. 4, a transmitter means a setup device of broadcast media. And, a setup device of broadcast media according to an embodiment of the present invention includes a plurality of retransmission program providing units, an AV signal format converting unit, a service information format converting unit, a broadcast media information setting unit, a service information format converting unit and a synthesizing unit.

A plurality of the retransmission program providing units 100 (100-1, 100-2, ...) provide prescribed programs, which have been broadcasted via broadcast media such as satellite, terrestrial, cable and the like, as retransmission programs. For instance, a plurality of the retransmission program providing units 100 corresponding to a satellite broadcast receiver, a terrestrial receiver or a cable broadcast receiver, receive programs and a plurality of service informations broadcasted via such a broadcast medium as a satellite, a terrestrial, a cable and the like and then stores the received programs or information in a storage means. And, a plurality of the retransmission program providing units 100 provides the programs and service informations stored in the storage means according to manipulations of broadcasting providers.

A plurality of the AV signal format converting units 110 (110-1, 110-2, ...) convert programs provided by a plurality of the retransmission program providing units 100, i.e., a format of AV signals.

In general, the broadcast media including a satellite, terrestrial, cable and the like differ from each other in a transmission rate of transmitting AV signals. A plurality of the AV signal format converting units 110 convert formats to fit transmission rates of AV signals provided by a plurality of the retransmission program providing units 100 for transmission rates of the broadcast media.

A plurality of the service information format converting units 120 (120-1, 120-2, ...) convert formats of the service informations provided by a plurality off the retransmission program providing units 100.

There exist slight differences between the service informations provided by broadcasting providers who broadcast prescribed programs via prescribed broadcast media in general, respectively So, a plurality of the service information format converting unit 120 extract informations necessary for the service informations provided by a plurality of the retransmission program providing units 100 and then convert the extracted informations to a format set up by the corresponding broadcasting provider.

A plurality of the broadcast media setting units 130 (130-1, 130-2, ...) sets broadcast media information in the service information of which format has been converted by a plurality of the service information format converting units 120. For instance, assuming that the retransmission program providing unit 100-1 provides a program having been broadcasted by satellite broadcasting via a prescribed channel, the broadcast media setting unit 130-1 sets the broadcast media information in the service information to indicate that a broadcast medium originally having broadcasted the corresponding program is the satellite broadcasting and to indicate a channel number of the corresponding satellite broadcasting. Assuming that the retransmission program providing unit 100-2 provides a program having been broadcasted by terrestrial broadcasting, the broadcast media setting unit 130-2 sets the broadcast media information in the service information to indicate that a broadcast medium originally having broadcasted the corresponding program is the terrestrial broadcasting and to indicate a channel number of the corresponding terrestrial broadcasting.

Generally, satellite broadcasting, terrestrial broadcasting, cable broadcasting and the like broadcast a plurality of programs on prescribed channels together with service information. And, the service information includes frequency information capable of receiving a broadcast signal of each channel, PID (packet identifier) capable of extracting an AV signal from a received broadcast signal and channel and program information.

Information for channels carrying prescribed programs is listed in SVCT (short-form virtual channel table) or LVCT (long-form virtual channel table) among various tables of the service information. A broadcast signal receiver configures a channel map using the SVCT and the LVCT and enables a program of a user-selected channel to be viewed.

In case of a retransmission program, the broadcast media setting unit 130 of the present invention sets an original broadcast medium to 4-bit 'original_media_type' below the 'virtual_channel ()' shown in FIG. 1C and sets a channel, via which the original broadcast medium has broadcasted the corresponding program, to 'virtual_channel_number'. And, the broadcast media setting unit 130 of the present invention sets an original broadcast medium to 'original_media_type' in the LVCT shown in FIG. 2 sets a major channel and a minor channel, via which the original broadcast medium has broadcasted the corresponding program, to 'major_channel_number' and 'minor_channel_number', respectively.

The transmission program providing unit 149 provides a program produced by a broadcasting provider itself or a program externally purchased to be broadcasted via a prescribed broadcast medium and service information for the corresponding program. In case that a program produced by a broadcasting provider itself does not exist, the transmission program providing unit 140 may not provided.

The synthesizing unit 150 synthesizes output signals of the AV signal format converting unit, 110, a plurality of the broadcast media information setting unit 130 and the transmission program providing unit 140. And, the synthesizing unit 150 includes an AV signal synthesizing unit 151, a service information synthesizing unit 153 and an AV signal/service information synthesizing unit 1550.

The AV signal synthesizing unit 151 synthesizes an AV signal of which format has been converted by a plurality of the AV signal format converting units 110 and a transmission program provided by the transmission program providing unit 140 into one signal.

The service information synthesizing unit 153 synthesizes service information outputted by a plurality of the broadcast media information setting units 130 and service information provided by the transmission program providing unit 140 into one service information.

The AV signal/service information synthesizing unit 155 synthesizes the AV signal synthesized by the AV signal synthesizing unit 151 and the service information synthesized by the service information synthesizing unit 153 into one signal. The AV signal and service information having been synthesized by the AV signal/service information synthesizing unit 155 are transmitted via a prescribed broadcast medium such as a satellite, a terrestrial, a cable and the like.

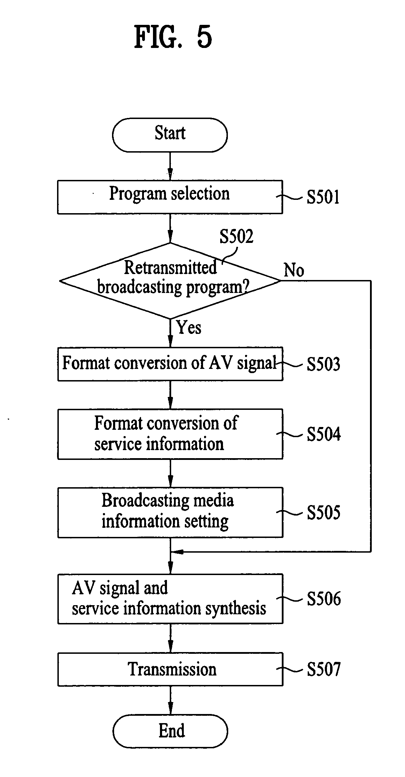

FIG. 5 is a flowchart for a method of processing a digital television signal in a transmitter according to an embodiment of the present invention.

Referring to FIG. 5, programs to be transmitted via a prescribed broadcast medium are selected. For instance, a plurality of the retransmission program providing units 100 and the transmission program providing unit 140 provide programs to be transmitted according to a user's manipulation or a preset program (S501).

Once the program to be transmitted is selected, it is decided whether the corresponding program is a program to be retransmitted (retransmission program) (S502). As a result of the decision, if the corresponding programs is the retransmission program, a format of AV signal is converted to fit a broadcast medium (S503). In particular, the AV signal format converting unit 110 converts a transmission rate of a format of AV signal, which is a retransmission program provided by the retransmission program providing unit 100, to fit a transmission rate of a broadcast medium.

A format of service information of the retransmission program is converted to a format set by a broadcasting provider (S504). In particular, the service information format converting unit 120 receives service information provided by the retransmission program providing unit 100 together with the retransmission program, extracts necessary information from the received service information and then converts a corresponding format to a format set by a broadcasting provider.

After completion of the format conversion of the service information, broadcast media information is set in the service information (S505). In particular, the broadcast media information setting unit 130 sets broadcast media information for a broadcast medium having broadcasted a corresponding program in the service information of which format has been converted by the service information format converting unit 120.

Subsequently, the format-converted AV signal, the format-converted and broadcast media information set service information and AV signal and service informations of a non-retransmitted program are synthesized into one signal (S506). The synthesized signal is then transmitted via a prescribed broadcast medium (5507).

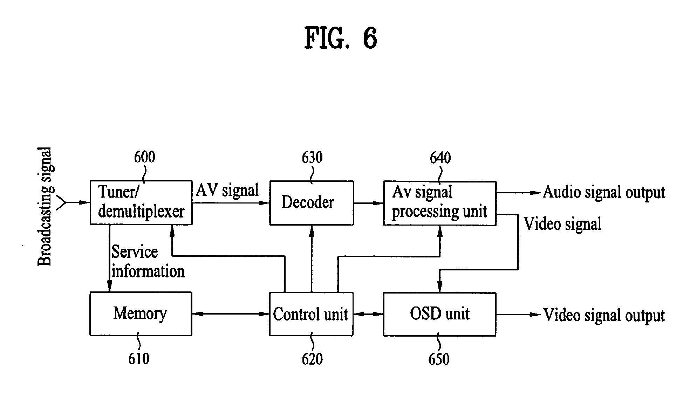

FIG. 6 is a block diagram of a broadcast receiver according to an embodiment of the present invention.

Referring to FIG. 6, a broadcast receiver according to an embodiment of the present invention includes a tuner/demultiplexer, a decoder, a memory, a control unit, an AV signal processing unit and an OSD unit.

The tuner/demultiplexer 600 receives a broadcast signal and then separates service information and a stream of an AV signal from the received broadcast signal.

The service information having been separated by the tuner/demultiplexer 600 is stored in the memory 610.

The control unit 620 extracts frequency information of each channel, PID (packet identifier), channel and program information by parsing the service information stored in the memory 610 and then configures a channel map. And, the control unit 620 controls to extract and display information of a broadcast medium from 'original_media_type" of the present invention carried by the broadcast signal. Moreover, the control unit 620 recognizes a channel number and then configures a channel map with a channel number of an original-broadcasting broadcast medium.

The decoder 630 decodes the AV signal outputted from the tuner/demultiplexer 600 under a control of the control unit 620. And, the decoder 630 decodes channel information under a control of the control unit 620.

The AV signal processing unit 640 separately outputs an audio signal and video signal by processing the AV signal outputted from the decoder 630.

The OSD (on screen display) unit 650 generates an OSD signal of the broadcast medium and channel information under a control of the control unit 620. The OSD unit 650 then sets the generated OSD signal in the video signal processed by the AV signal processing unit 640.

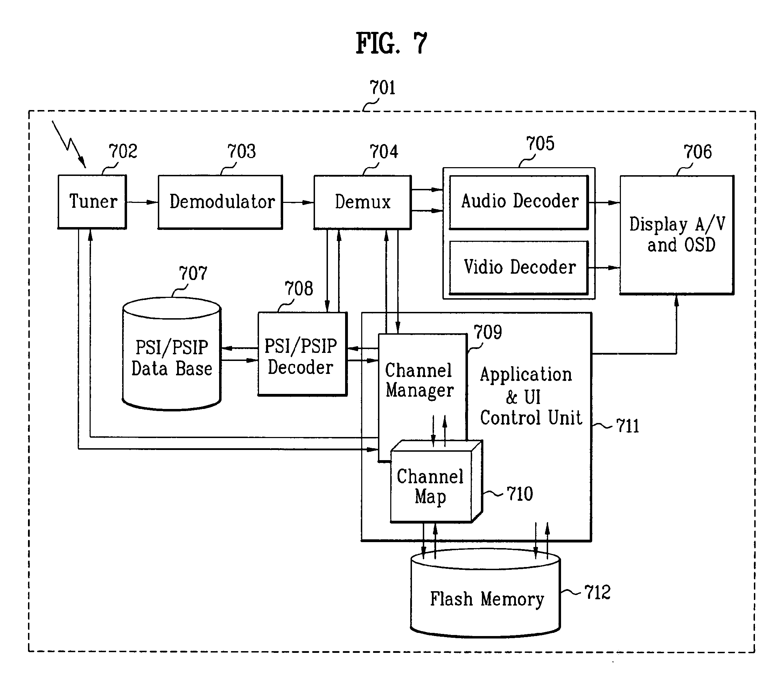

FIG. 7 is a block diagram of a broadcast receiver according to an embodiment of the present invention, in which the decoder and control unit of the broadcast receiver shown in FIG. 6 is depicted in detail.

Referring to FIG. 6 and FIG. 7, the decoder includes a demux 704 and a PSI/PSIP decoder 708. In case of PSI, the PSI decoder 708 receives PAT, parses the received PAT and then sends PMT PID to the demux 704. Subsequently, the demux 704 extracts an original media type field by decoding PMT.

The control unit 711 includes a channel manager 709 and a channel map 710. And, the control unit 711 controls an application and a user interface.

The channel manager 709 checks the original media type field to decide whether a corresponding broadcast is a retransmitted broadcast, decides an original broadcast medium, and controls the application. And, the channel manager 709 configures a channel map of a broadcast program retransmitted with a channel number of an original broadcast medium by recognizing a virtual channel number.

The channel map 710 stores basic information for a channel. The original broadcast medium extracted from the original media type field and an originally broadcasted channel number are stored in the channel map 710.

The control unit 711 controls a user interface according to a user's selection inputted via a key input unit 713.

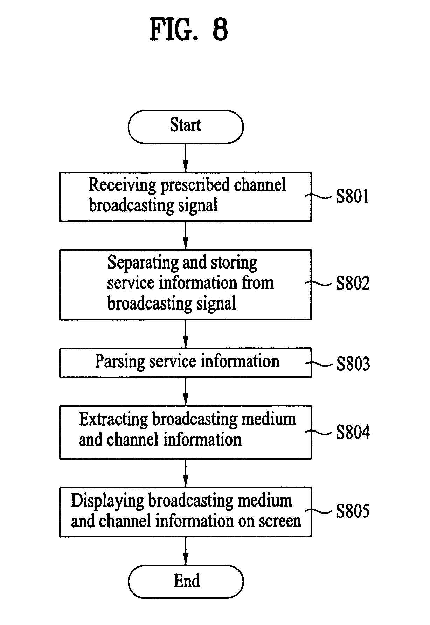

FIG. 8 is a flowchart of a method of processing a digital television signal in a receiver according to an embodiment of the present invention.

Referring to FIG. 8, the tuner/demultiplexer 600 receives a broadcast signal of a prescribed channel (S801).

The tuner/demultiplexer 600 separates service information from the received broadcast signal and then stores the separated service information in the memory 610 (S802).

If so, the control unit 620 reads the service information stored in the memory 610 and then extracts a broadcast medium and channel information (S804) by parsing the read service information (S803).

In particular, the control unit 620 extracts 'original_media_type' indicating a type of a broadcast medium of which service information was parsed, 'virtual_channel_number' or 'major_channel_number' and 'minor_channel_number' indicating a channel number. And, the control unit 620 extracts a broadcast medium defined by the 'original_media_type' using the table shown in FIG. 3.

Thus, once the broadcast medium and the channel information are extracted, the control unit 320 controls the OSD unit 350 according to the extracted broadcast medium and channel information to generate an OSD signal of the broadcast medium and channel. The generated OSD signal is synthesized with the audio signal processed by the AV signal processing unit 640 and is then outputted to be displayed on a screen (S805).

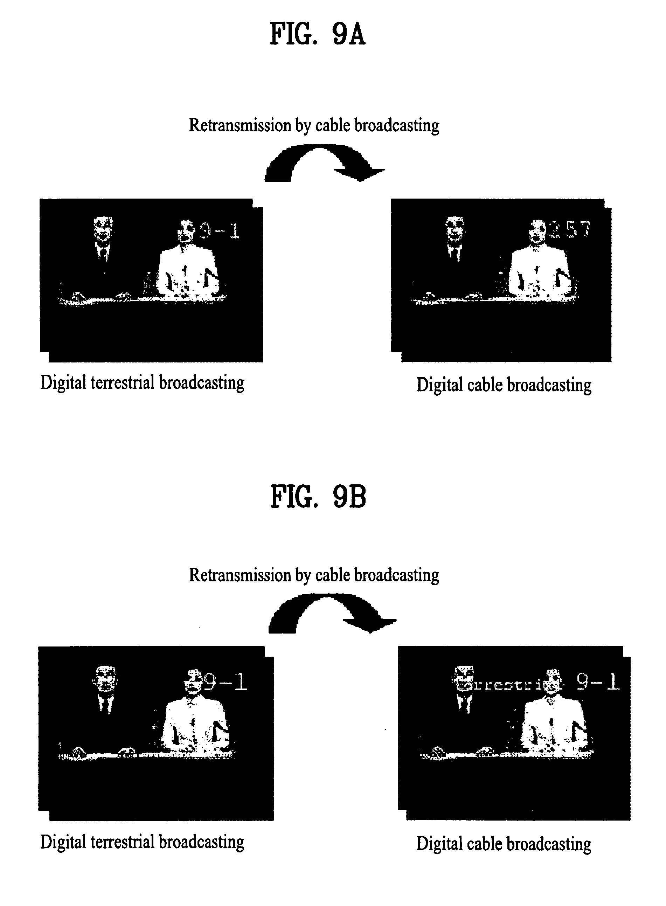

FIG. 9A and FIG. 9B are diagrams of outputs of broadcast signals according to an embodiment of the present invention, in which an effect of the present invention is shown.

Referring to FIG. 9A, in case of retransmitting a program, a retransmission channel number is provided only without providing information indicating a retransmitted program.

Referring to FIG. 9B, according to the present invention, in case of retransmitting a program, information indicating a retransmitted program is provided and an original channel number is maintained.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of processing a digital television signal in a digital television receiver, comprising:
a step (a) of receiving an service information table including an original media type field;
a step (b) of extracting the original media type field indicating an original broadcast medium of a retransmitted program by parsing the service information table; and
a step (c) of displaying the original broadcast medium of the retransmitted program.

2. The method of claim 1, wherein the information table is a virtual channel table (VCT) of a Program and System Information Protocol (PSIP).

3. The method of claim 2, wherein the VCT is a either short-form VCT or a long-form VCT.

4. The method of claim 1, wherein the information table is either a program map table (PMT) of Program Specific Information (PSI) or a service description table (SDT) of Service Information (SI) of a DVB.

5. The method of claim 1, further comprising the step of extracting an original channel number of the retransmitted program.

6. The method of claim 5, further comprising the step of configuring a channel map by synthesizing the extracted original broadcast medium and the original channel number of the retransmitted program.

7. A method of processing a digital television signal in a transmitter, comprising:
a step (a) of inserting an original media type field indicating an original broadcast medium of a retransmitted program into an service information table; and
a step (b) of transmitting the service information table.

8. The method of claim 7, further comprising the step of setting a channel number to an original channel number of the retransmitted program.

9. A digital broadcast receiver comprising:
a tuner receiving a broadcast signal equipped with an original media type field indicating an original broadcast medium of a retransmitted program;
a decoder extracting the original media type field by parsing the received broadcast signal; and
a control unit controlling a channel information output according to a value of the extracted original media type field.

10. The digital broadcast receiver of claim 9, wherein the decoder extracts an original channel number of the retransmitted program.

11. The digital broadcast receiver of claim 10, wherein the control unit controls to configure a channel map by synthesizing the extracted original broadcast medium and the original channel number of the retransmitted program.

12. The digital broadcast receiver of claim 10, further comprising a display unit displaying the extracted original broadcast medium and the original channel number of the retransmitted program.

13. A digital broadcast transmitter comprising:
at least one retransmission program providing unit providing a retransmission program and service information to be broadcasted via a first broadcast medium;
at least one broadcast media information setting unit setting information of an original broadcast medium having broadcasted the retransmission program in the service information provided by the at least one retransmission program providing unit; and
a transmitting unit transmitting a broadcast signal having the retransmission information set therein.

14. The digital broadcast transmitter of claim 13, further comprising a synthesizing unit synthesizing the retransmission program provided by the at least one retransmission program providing unit and the service information in which the at least one broadcast media information setting unit has set the broadcast media information.

15. The digital broadcast transmitter of claim 13, wherein the retransmission information is an original broadcast medium or an original channel number of the retransmission program.

16. A digital television signal, which is used for a digital television receiver in receiving program information from a broadcast transmitter, the digital television signal comprising a service information table including an original media type field indicating an original broadcast medium of a retransmitted program.

17. The digital television signal of claim 16, wherein a channel number of the service information table has a value of an original channel number of the retransmitted program.

18. The digital television signal of claim 16, wherein the information table is a virtual channel table (VCT) of a Program and System Information Protocol (PSIP).

19. The digital television signal of claim 18, wherein VCT is either a short-form VCT or a long-form VCT.

20. The digital television signal of claim 16, wherein the information table is either a program map table (PMT) of Program Specific Information (PSI) or a service description table (SDT) of Service Information (SI) of a DVB.
